Europäisches Patentamt

European Patent Office

Office européen des brevets

(11) Publication number: **0 129 521 B1**

# EUROPEAN PATENT SPECIFICATION

(45) Date of publication of patent specification: **10.04.91**  (51) Int. Cl.⁵: **B23B** 39/16, B23Q 7/14, B27M 3/18

(21) Application number: **84850135.9**

(22) Date of filing: **30.04.84**

(54) Method and device for handling plane workpieces when boring holes.

(30) Priority: **02.05.83 SE 8302467**

(43) Date of publication of application:
**27.12.84 Bulletin 84/52**

(45) Publication of the grant of the patent:
**10.04.91 Bulletin 91/15**

(84) Designated Contracting States:
**DE GB IT**

(56) References cited:
**DE-A- 2 106 559       DE-A- 2 722 073
DE-B- 1 169 110       FR-A- 2 191 981
US-A- 3 712 105       US-A- 3 793 916
US-A- 3 934 375**

(73) Proprietor: **Granberg Interior Mobile Aktiebolag
Box 4030
S-600 04 Norrköping(SE)**

(72) Inventor: **Granberg, Bertil
Linköpingsvägen 34
S-602 36 Linköping(SE)**

(74) Representative: **Willquist, Bo Lorentz
PATS Willquist Patents S:t Larsgatan 29
S-582 24 Linköping(SE)**

Rank Xerox (UK) Business Services

## Description

This invention relates to a method for handling of plane workpieces preferably parts for cabinets, to be provided with holes into opposite ends of the respective workpiece, which holes should fit pegs for assembling purposes, whereby the workpiece in question is conveyed by at least one endless conveying means in a main direction and by cooperation between stops and said conveying means is held in a fixed position during the boring operation. The invention also relates to a handling and boring device for plane workpieces, preferably parts for cabinets and for boring holes into opposite ends of the respective workpiece, which holes should fit pegs for assembling purposes, comprising sets of drills, and at least one endless conveying means for conveying the workpiece in question in one main direction and stops cooperating with said conveying means for fixing the workpiece so that it cannot move during the hole boring operation.

Assembling cabinet parts by the so-called centre pin method is one of the corner stores in the manufacturing of plane furniture. The method entails boring a number of holes in the two opposite ends of the shelve planes and subsequently pressing suitable, e.g. round, wooden plugs into the holes. Corresponding holes are bored at the cabinet sides, whereby the parts can then be assembled to a cabinet framework.

Amongst the machines for these boring operations three major types can be distinguished: Manual drills, high production machines and numerically controlled (computer controlled) machines.

The manual machines are intended principally for piece manufacturing and manufacturing of small series. Especially big problems arise with side boring i.e. when boring at the side, as the workpiece must be dealt with a number of times to achieve the considered hole pattern.

The machines occuring on the market for an average high and high production are double-sided for transverse passage of the material. This generally means short tempos, but also results in long adjusting times as the machine has to be adapted to the shape of each occuring shape of material.

The machine manufacturers try to remedy this with more or less advanced adjusting automation, which however results in high purchasing prices and thus means increased unaccessness to small and middle sized carpentry factories.

The step between the purely manual and the high production machines is at present colossal, both concerning price and capacity.

The latest trend in the area is the numerically controlled boring machines which combine short adjusting times with the manufacturing of parts adapted to the volume of orders. Nevertheless these machines result in a high purchasing price, which cannot be considered resonable in relation to the degree of utilization, i.e. the fact that they only bore vertically.

DE-B-1 169 110 discloses a boring machine of the abovementioned kind. The machine has conveying means which cooperate with stops defining boring stations in which leading and trailing ends of a workpiece are bored simultaneously. This means that workpieces of various lengths can be treated only after adjustment of the stops and the boring stations. Consequently relatively big batches should be treated in order to keep adjustment time down.

In US-A-3 712 105 is disclosed a method and apparatus for forming metal wherein the method comprises the steps of moving finite lengths of metal along the prescribed path, stopping each length of metal at a predetermined position, moving a metal forming machine across the leading edge of the metal to form the same, moving the metal past the machine after it has cleared the metal, returning the machine to its initial position, reversing the movement of the metal along the path after it passes the machine to return it to a second predetermined position while moving a second piece of metal to the first predetermined position and repeating the moving of the machine across the trailing edge of the first piece of metal and leading edge of the second piece of metal to form the same and repeating the operation to form the leading and trailing ends of subsequently fed pieces of metal . The apparatus includes a first transfer table for moving the metal to the first predetermined position, a metal forming machine, means for moving the metal forming machine across the path of movement of the metal, and a second transfer table for moving the metal away from the machine and back toward the machine to the second predetermined position. However, since the metal forming machine is moved across the leading and trailing edges of the metal, this method and apparatus could not be applicable for boring holes in a workpiece preferably of wood.

The main object of the invention is principally to achieve a method of above said type, which solves above said disadvantages and which facilitates rational accomplishment of bores in desired places on plane workpieces.

Said object is achieved by means of a method according to the present invention which is mainly characterized in that a front boring station in which the hole boring of the leading end of the workpiece is performed and the rear boring station in which the hole boring of the trailing end of the workpiece is performed are defined by said stops being formed by bars having openings for a set of drills and extending across the main direction of transportation, that during the handling of the workpiece in question it is first conveyed in the main direction until the trailing end of the workpiece has passed the rear boring station, that the direction of the transportation is then reversed and the trailing end of the workpiece is brought into closed contact with the rear stop and fixed against movement between the conveyor and the rear stop, whereafter the hole boring is performed, that hereafter the working piece is released and conveyed in the main direction of transportation so that the leading end is brought into close contact with the front stop and fixed against movement between the conveyor and the front stop, whereafter the hole boring is performed, that the workpiece is then released and is finally conveyed in the main direction of transportation for further treatment or intermediate storing.

By means of the present method workpieces of different lengths may be treated without adjusting the positions of the stops.

A further object of the present invention is also to achieve a device for carrying out a procedure according to the invention.

Said further object is achieved by means of an arrangement according to the invention which is mainly characterized in, that said stops are formed by bars having openings for the drills and extending across the main direction of transportation to define a front boring station in which the whole boring of the leading end of the workpiece is carried out during close contact of the leading end against the corresponding front stop and a rear boring station in which the hole boring of the trailing end of the workpiece is carried out during close contact between the trailing end and the rear stop, that said conveying means is reverseable and arranged to convey the workpiece in the main direction of transportation into the device until the trailing end of the workpiece has passed the rear stop, to reverse the direction of transportation and bring the trailing end of the workpiece to close contact against the rear stop and fixing it for hole boring operation, that after ended hole boring operation conveying the workpiece in the main direction of transportation in order to bring the leading end of the workpiece into close contact against the front stop and fixing it for hole boring and after that conveying the workpiece in the main direction of transportation out of the device and in that said conveying means, and said rear and front stops are relatively moveable towards each other to fasten the workpiece therebetween for the boring operation.

The invention is described below as a preferred example of embodiment referring to the enclosed drawings, on which:
Figure 1 shows schematically a perspective view of a machine designed according to the invention which is suitable for achieving drilled bores at the ends of plane workpieces,
Figures 2-7 show schematically a cycle of a workpiece passing through said machine, whereas

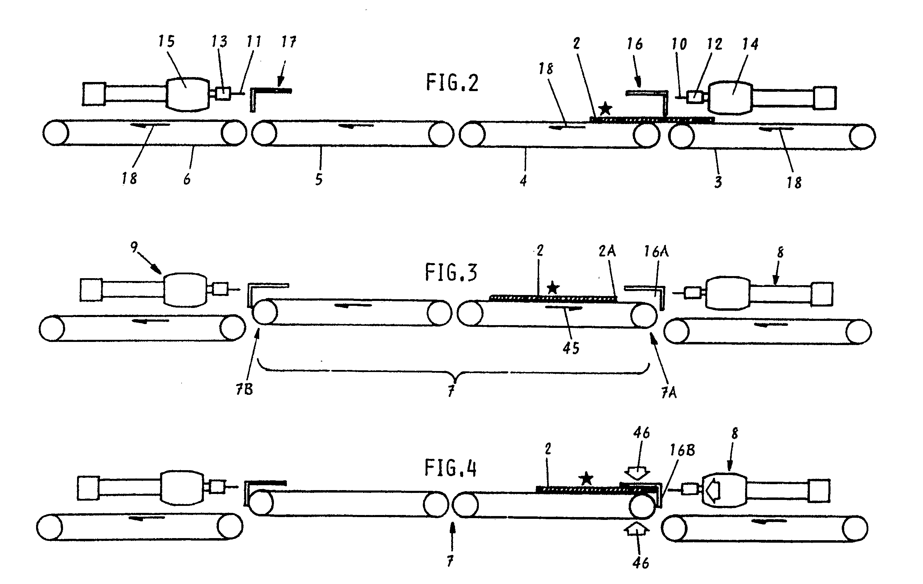

Figure 2 shows the feed in of a workpiece to the boring station situated at the back of the machine, seen from the direction of feed of the workpiece,
Figure 3 shows the fitting in of the workpiece at said back boring station,
Figure 4 shows the fixation of the workpiece at said back boring station,

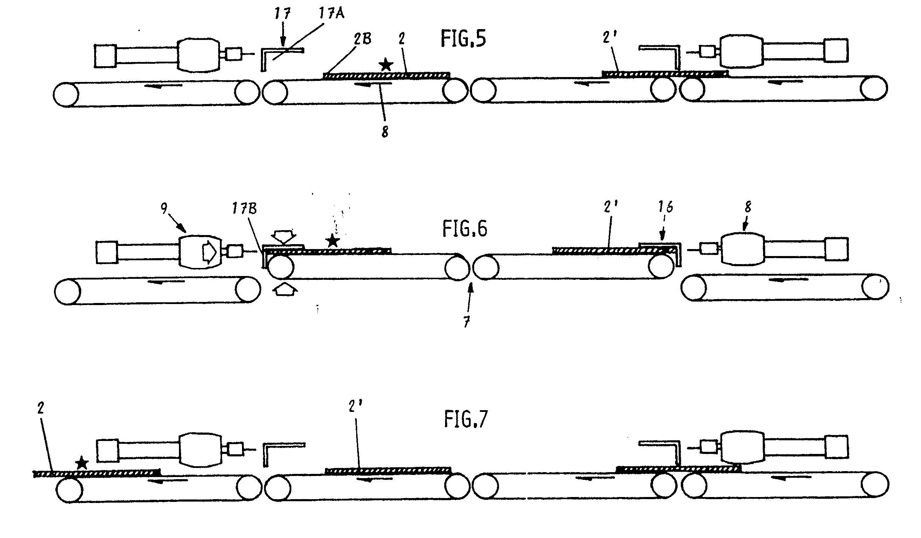

Figure 5 shows the feed of the workpiece to a boring station situated at the front,
Figure 6 shows the fixation of the workpiece at said front boring station, and
Figure 7 shows the feed out of the workpiece from said machine.

The boring machine shown on the drawings, which is marked with the numeral 1, is principally intended to accomplish drilled bores at the ends of plane workpieces 2, as for example shelve planes, to accomplish for example centre pin bores by so-called horizontal boring with which suitable plugs can be connected with corresponding bores drilled by so-called vertical boring in cabinet sides and assembled to form cabinet frameworks. The machine 1 includes a number of conveyors 3, 4, 5, 6, which in the shown embodiment are belt conveyors, which are formed by a plurality laterally displaced belts or chains but also other types of suitable conveyors can be used. The two conveyors 3 and 6 respectively situated at either end of the machine 1, the feed-in conveyor 3 and the feed-out conveyor 6 surround a machine table 7 which is vertically movable, and is created by connecting the two middle conveyors 4, 5 to each other. At least the back one 4 of these said two conveyors 4, 5 are conneted to a driving device so that it can be able to move forwards as well as backwards.

In the region above the two conveyors 3, 6 respectively which can only be driven in the transport direction is supported a preferably fixed arranged boring station 8 and 9 respectively. Said both boring stations 8, 9 comprise a suitable number of bores 10 and 11 respec tively, which are directed towards the region of said machine table 7 and which are supported by boring heads 12 and 13 respectively, and are in turn connected to drill motors 14 and 15 respectively.

A stop 16 and 17 respectively, that reaches across said conveyors 3-6 and the intended direction of transport of the workpieces, marked with the arrow 18 and are each preferably formed by a stop bar, is supported in the region above the machine table 7 at its rear and front edge regions 7A and 7B respectively. In the preferred embodiment said stops 16, 17 are formed by bars having Y-shaped cross section having the opening 16A and 17A respectively turned towards the machine table 7. At least the vertical end side 16B and 17B respectiely of said bar 16, 17 respectively shows for example slit-shaped drill receiving openings 19 and 20 respectively intended to receive drills 10 and 11 respectively ment for the end boring. To make it possible to apply the invention also to side boring, i.e. when boring at the side of a workpiece 2 across the extension of its surface, also the respective horizontal side 16C and 17C of the respective stop 16, 17 can be provided with similar drill openings 21 and 22 respectively, as the openings 19, 20.

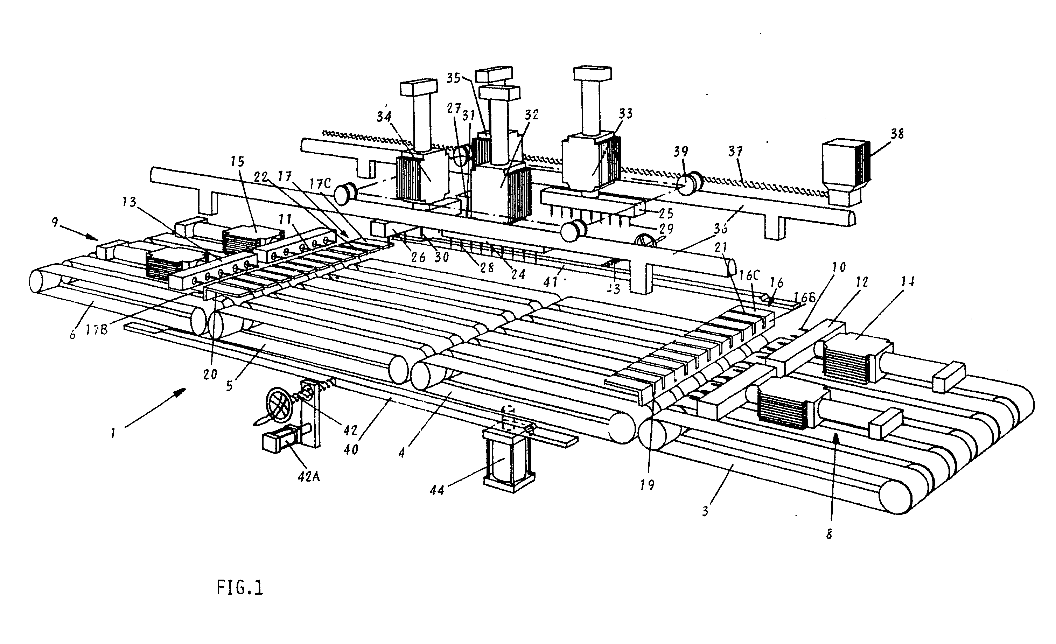

The vertical boring can appropriately be carried out by means of a set of drills 23, which include a number of boring heads 24-27 extending along the edges of a workpiece and supporting a number of drills 28-31 and driven by drill motors 32-35. Said set of drills 23 is supported and adjustably controlled along tracks 36 which are situated above the conveyors 3-6 of the machine as shown in figure 1, and said set of drills 23 is preferably arranged to be computer controlled in a suitable way, and the drive can for example be done via a threaded screw 37 and the motor 38, transferring driving motion to wheels 39 running on the tracks 36.

A guiding rule 40 and 41 respectively or some other suitable guiding means arranged on each side of the machine table 7 or is movable towards and away from each other by for example co-operation each with a threaded adjusting screw 42 and 43 respectively for adjusting according to a scale and intended to position the workpieces 2 rela tive to the width extension of the machine, when they are transported along the machine table 7. One of the rules 40 is furthermore arranged to be automatically adjustable a certain distance sideways under the influence of an adjusting device 42A, when the workpiece is fixed to the machine table 7 to be prevented from moving sideways.

The above described machine 1 can be arranged to be automatically controlled by so-called "computer control", but is also intended for less sophisticated control if so desired. Without changing the machine 1 it is facilitated to making end bores in for example shelf planes having different lengths, which is important when not working with big batches continuously, but varies by treating workpieces of different lengths. Also different workpieces of various width can be treated in the present machine, without causing trouble, as on easy adjustment of the guiding rules 40, 41 is now facilitated. The time of a tempo, i.e. the time it normally takes to treat a workpiece of a certain length in the machine 1, is estimated to be approx.

12 secs when boring only horizontally. If both vertical- and horizontal boring is carried out the tempo time of one passing through could reach approx. 30-35 secs.

The machine table 7, which is vertically adjustable is suitably impressionable by a number of preferably fluid driven jacks 44 situated on the under side of the table 7 In order for the top side of the table to be attainable for vertical boring by means of the set of drills 23, where the respective bore units can be activated independently depending on the desired bore pattern along and/or across a workpiece 2.

As the two boring stations 8 and 9 respectively of the machine are fixed and that the machine thus in its outer shape is unchangeable, a simple building-in of the same is facilitated. The machine 1 occupies considerably less floor space in comparison to known machines, as it is principally intended to work by means of the workpieces 2 being transported through the machine lengthwise while being bored at appropriate stations, and it can also be placed next to a wall or similar.

When application of an above described machine the procedure is according to the following, referring to figures 2-7: The workpiece 2 for example a shelf plane or a side of a cabinet, is fed-in by means of the conveyor 3 in the direction of the arrow 18 passing the drilling station 8 of its under side and across to the conveyor 4 passing the back stop 16 by its under side. In the procedure shown in the dawings, the workpiece 2 is fed past the stop 16 far enough for the rear end 2A of the workpiece to pass the stop 16, whereafter the feed direction of the conveyor 4 is diverted, so that it runs backwards in the direction of the arrow 45, against the feed-in direction of the workpiece, simultaneously with the machine table 7 is influenced to rise relative to the stop 16. Then the rear end 2A of the workpiece will be receiyed by the inner cavity 16A of the stop so that it comes in close contact with the inside of the vertical end side 16B of the stop 16. The feeding of the conveyor is terminated when said close contact occurs simultaneously as the rules 40, 41 position the workpiece 2 sideways. By the squeezing effect between the machine table 7 and the horizontal part 16C of said stop 16 the workpiece is fastened and efficiently fixed, such as shown with the arrows 46 in fig 4. A following horizontal boring and/or vertical boring at the rear end 2A of the workpiece 2 is then achieved by means of the drills 10, 30, 31 which then are received by the openings 19, 21 in the stop.

After the boring operation the workpiece 2 is released from the squeezing effect as the table 7 is lowered, whereafter the workpiece 2 is fed forward in the direction of the arrow 18 over to the conveyor 5 to the region of the stop 17 situated at the front. By once again letting the table 7 raise the front end 2B of the workpiece will be received by the inner cavity 17A of the stop bar where it comes in close contact with its vertical side 17B, in which position incessant feeding of the conveyor is terminated. A similar fixation of the workpiece 2, which at the other end 7A of the table is achieved by a squeezing effect between the table 7 and said stop 17 before boring horizontal and/or vertical holes, by means of the drills 11, 30, 31. Also other desired boring can be achieved at said station.

After said drilling operation the workpiece is released by lowering the table 7, whereafter the workpiece 2 is fed out to the following treatment passing under said stop 17 and drilling station 9 is achieved by means of the conveyor 6.

Simultaneously as the workpiece 2 is fed between the two stops 16 and 17 respectively a new workpiece 2 can be fed into the machine 1 in above said manner, if the length of the table allows, for rational simultaneous treatment of two workpieces 2, 2.

The invention is not restricted to the embodiment described above and shown on the drawings, but can be varied within the scope of succeeding patent claims. For example instead of having the table 7 vertically adjustable the stops 16, 17 can move vertically. It is also feasibly possible to leave out the diverting of the conveyor 4 if the workpiece is fed past the stop 16 and the rear end 2A of the workpiece is stopped in the right position at the stop 16 and/or if the stops 16, 17 are made adjustable in the horizontal direction.

**Claims**

1. Method for handling of plane workpieces (2), preferably parts for cabinets, to be provided with holes into opposite ends (2A, 2B) of the respective workpiece, which holes should fit pegs for assembling purposes, whereby the workpiece (2) in question is conveyed by at least one endless conveying means (4, 5) in a main direction (18) and by cooperation between stops (16, 17) and said conveying means (4, 5) is held in a fixed position during the boring operation, **characterized** in that, a front boring station in which the hole boring of the leading end (2B) of the workpiece (2) is performed and the rear boring station in which the hole boring of the trailing end (2A) of the workpiece (2) is performed are defined by said stops (16, 17) being formed by bars having openings for a set of drills and extending across the main direction of transportation, that during the handling of the workpiece in question it is first conveyed in the main direction (18) until the trailing end of the workpiece has passed the rear boring station, that the direction of the transportation is then reversed and the trailing end (2A) of the workpiece (2) is brought into closed contact with the rear stop (16) and fixed against movement between the conveyor and the rear stop whereafter the hole boring is performed, that hereafter the work piece (2) is released and conveyed in the main direction (18) of transportation so that the leading end is brought into close contact with the front stop (17) and fixed against movement between the conveyor and the front stop, whereafter the hole boring is performed, that the workpiece is then released and is finally conveyed in the main direction (18) of transportation for further treatment or intermediate storing.

2. Method according to claim 1, **characterized** in that, the fixing of the workpiece (2) is achieved by raising said conveying means (4, 5) against the front and rear stops (16, 17) respectively.

3. Handling and boring device for plane workpieces (2), preferably parts for cabinets, and for boring holes into opposite ends (2A, 2B) of the respective workpiece (2), which holes should fit pegs for assembling purposes, comprising sets of drills (8, 9), and at least one endless conveying means (4, 5) for conveying the workpiece in question in one main direction and stops (16, 17) cooperating with said conveying means (4, 5) for fixing the workpiece (2) so that it cannot move during the hole boring operation, **characterized** in that said stops (16, 17) are formed by bars having openings for the drills and extending across the main direction (18) of transportation to define a front boring station in which the whole boring of the leading end (2B) of the workpiece (2) is carried out during close contact of the leading end (2B) against the corresponding front stop (17) and a rear boring station in which the hole boring of the trailing end (2A) of the workpiece (2) is carried out during close contact between the trailing end (2A) and the rear stop (16), that said conveying means is reverseable and arranged to convey the workpiece in the main direction (18) of transportation into the device until the trailing end (2A) of the workpiece (2) has passed the rear stop (16), to reverse the direction of transportation and bring the trailing end (2A) of the workpiece (2) to close contact against the rear stop (16) and fixing it for hole boring operation, that after ended hole boring operation conveying the workpiece in the main direction (18) of transportation in order to bring the leading end (2B) of the workpiece (2) into close contact against the front stop (17) and fixing it for hole boring and after that conveying the workpiece (2) in the main direction (18) of transportation out of the device and in that said conveying means (4, 5), and said rear and front stops (16, 17) are relatively moveable towards each other to fasten the workpiece therebetween for the boring operation.

4. Device according to claim 3, **characterized** in that, the distance between said front end rear boring stations is such that it is more than double the length of the most common workpiece (2).

5. Device according to claim 3, **characterized** in that, said conveying means (4, 5) is arranged to be raised against the stops (16, 17) respectively for fixing the workpiece (2) in question.


**Revendications**

1. Méthode pour la manutention de pièces d'ouvrage planes (2), de préférence de pièces détachées pour coffrets, pourvues de trous à leurs extrémités opposées (2A,2B) les trous étant destinés à recevoir des chevilles à des fins d'assemblage, ce pour quoi la pièce d'ouvrage (2) en question est convoyée au moyen d'au moins un convoyeur sans fin (4,5) dans une direction principale (18) et sont maintenues par coopération de butées (16,17) et dudit convoyeur (4,5) dans une position fixe au cours de l'opération de perçage, caractérisée :

en ce qu'un poste "avant" de perçage où est exécuté le perçage du trou de l'extrémité avant (2B) de la pièce (2) et un poste "arrière" de perçage où est exécuté le perçage du trou de l'extrémité arrière (2A) de la pièce (2), sont définis par lesdites butées (16,17) formées de barres ayant des ouvertures pour un jeu de mèches et s'étendant perpendiculairement à la direction principale du transport,

en ce que au cours de la manutention, la pièce en question est d'abord convoyée dans la direction principale (18) jusqu'à ce que l'extrémité arrière de la pièce ait dépassé le poste arrière de perçage,

en ce que la direction du transport est ensuite inversée et en ce que l'extrémité arrière (2A) de la pièce (2) est amenée en étroit contact avec la butée arrière (16) et immobilisée entre le convoyeur et la butée arrière, après quoi le perçage du trou est exécuté,

puis en ce que la pièce (2) est dégagée et convoyée dans la direction principale (18) de transport de sorte que l'extrémité avant est amenée en étroit contact avec la butée avant (17) et immobilisée entre le convoyeur et la butée avant, après quoi le trou de perçage est réalisé,

en ce que la pièce est ensuite dégagée et est finalement convoyée dans la direction principale de transport (l8) pour un autre traitement ou un stockage immédiat ;

2. Méthode selon la revendication 1, caractérisée :

en ce que l'immobilisation de la pièce (2) est obtenue en soulevant ledit convoyeur (4,5) en direction des butées respectives avant et arrière (16,17) ;

3. Appareil de manutention de pièces planes (2), de préférence de pièces détachées pour coffrets, et de perçage de trous dans des extrémités opposées (2A,2B) de la pièce respective (2) dont les trous sont destinés à recevoir des chevilles à des fins d'assemblage, ledit appareil comprenant des jeux de mèches (8,9), au moins un convoyeur sans fin (4,5) pour le transport de la pièce en question dans une direction principale, et des butées (16,17) coopérant avec ledit convoyeur (4,5) pour immobiliser la pièce (2) de sorte qu'elle ne puisse pas bouger au cours de l'opération de perçage du trou, caractérisé :

en ce que lesdites butées (16,17) sont formées de barres ayant des ouvertures pour les mèches, et s'étendant perpendiculairement à la direction principale du transport (18) pour définir un poste "avant" de perçage où est exécuté le perçage du trou de l'extrémité avant (2B) de la pièce (2) au cours d'un étroit contact de l'extrémité avant (2B) contre la butée correspondante avant (17), et un poste arrière de perçage où est exécuté le perçage du trou de l'extrémité arrière (2A) de la pièce (2) au cours d'un étroit contact entre l'extrémité arrière (2A) et la butée arrière (16), ledit convoyeur étant disposé et pouvant être inversé pour convoyer la pièce dans la direction principale (18) de transport de l'appareil jusqu'à ce que l'extrémité arrière (2A) de la pièce (2) ait dépassé la butée arrière (16), puis pour inverser la direction du transport et amener l'extrémité arrière (2A) de la pièce (2) en étroit contact avec la butée arrière (16) et l'immobiliser pour l'opération de perçage du trou, puis pour, une fois l'opération de perçage du trou terminée, convoyer la pièce dans la direction principale de transport (18) de façon à amener l'extrémité avant (2B) de la pièce (2) en étroit contact avec la butée avant (17) et l'immobiliser pour le perçage du trou puis, après cela, convoyer la pièce (2) dans la direction principale de transport (18) hors de l'appareil, et

en ce que ledit convoyeur (4,5) et lesdites butées avant et arrière (16,17) sont déplaçables relativement l'une en direction de l'autre pour immobiliser la pièce située entre elles, pour l'opération de perçage ;

4. Appareil selon la revendication 3, caractérisé : en ce que la distance séparant lesdits postes arrière et avant de perçage est le double de celle de la longueur des pièces (2) la plus courante ;

5. Appareil selon la revendication 3, caractérisé : en ce que ledit convoyeur (4,5) est disposé de façon à être soulevé contre les butées respectives (16,17) pour l'immobilisation de la pièce (2) en question.

## Ansprüche

1. Verfahren zur Handhabung ebener Werkstücke (2), vorzugsweise Schrankteile, die mit Löchern in entgegengesetzten Enden (2A,2B) des jeweiligen Werkstücks zu versehen sind, die Zapfen für den Zusammenbau aufnehmen sollen, wobei das fragliche Werkstück (2) von wenigstens einer Endlosfördereinrichtung (4,5) in einer Hauptrichtung (18) gefördert wird und durch Zusammenwirkung zwischen Anschlägen (16,17) und der Fördereinrichtung (4,5) während des Bohrvorgangs in einer festen Position gehalten wird, **dadurch gekennzeichnet**, daß eine vordere Bohrstation, in der das Lochbohren am vorderen Ende (2B) des Werkstücks (2) ausgeführt wird, und die hintere Bohrstation, in der das Lochbohren am hinteren Ende (2A) des Werkstücks (2) ausgeführt wird, durch die Anschläge (16,17) definiert werden, die als Stangen ausgeführt sind, die Öffnungen für einen Satz Bohrer aufweisen und sich quer zur Haupttransportrichtung erstrecken, daß während der Handhabung des fraglichen Werkstücks dieses zunächst in der Hauptrichtung (18) gefördert wird, bis das hintere Ende des Werkstücks an der hinteren Bohrstation vorbeigelaufen ist, daß die Transportrichtung dann umgekehrt wird und das hintere Ende (2A) des Werkstücks (2) in enge Berührung mit dem hinteren Anschlag (16) gebracht und gegen Bewegung zwischen dem Förderer und dem hinteren Anschlag festgelegt wird, wonach das Lochbohren ausgeführt wird, daß anschließend hieran das Werkstück (2) freigegeben und in der Haupttransportrichtung (18) gefördert wird, sodaß das vordere Ende in enge Berührung mit dem vorderen Anschlag (17) gebracht und gegen Bewegung zwischen dem Förderer und dem vorderen Anschlag festgelegt wird, woraufhin das Lochbohren ausgeführt wird, daß das Werkstück dann freigegeben und schließlich in der Haupttransportrichtung (18) zur weiteren Bearbeitung oder Zwischenlagerung gefördert wird.

2. Verfahren nach Anspruch 1, dadurch gekennzeichnet, daß das Festlegen des Werkstücks (2) durch Anheben der Fördereinrichtung (4,5) gegen die vorderen bzw. hinteren Anschläge (16,17) ausgeführt wird.

3. Handhabungs- und Bohrvorrichtung für ebene Werkstücke (2), vorzugsweise Schrankteile, und zum Bohren von Löchern in entgegengesetzte Enden (2A,2B) des betreffenden Werkstücks (2), die Zapfen für den Zusammenbau aufnehmen sollen, enthaltend einen Satz Bohrer (8,9) und wenigstens eine Endlosfördereinrichtung (4,5) zum Fördern des fraglichen Werkstücks in einer Hauptrichtung und Anschläge (16,17), die mit der Fördereinrichtung (4,5) zusammenwirken, um das Werkstück (2) derart festzulegen, daß es sich während des Lochbohrvorgangs nicht bewegen kann, dadurch gekennzeichnet, daß die Anschläge (16,17) von Stangen gebildet sind, die Öffnungen für die Bohrer aufweisen und sich quer zur Haupttransportrichtung (18) erstrecken, um eine vordere Bohrstation zu definieren, in der das Lochbohren am vorderen Ende (2B) des Werkstücks (2) ausgeführt wird, während das vordere Ende (2B) in enger Anlage an dem entsprechenden vorderen Anschlag (17) ist, und eine hintere Bohrstation zu definieren, in der das Lochbohren am hinteren Ende (2A) des Werkstücks (2) ausgeführt wird, während sich das hintere Ende (2A) in enger Anlage an dem hinteren Anschlag (16) befindet, daß die Fördereinrichtung umkehrbar ist, und dazu eingerichtet ist, das Werkstück in der Haupttransportrichtung (18) in der Vorrichtung zu fördern, bis das hintere Ende (2A) des Werkstücks (2) an dem hinteren Anschlag (16) vorbeigelaufen ist, um die Transportrichtung umzukehren und das hintere Ende (2A) des Werkstücks in enge Anlage an den hinteren Anschlag (16) zu bringen und es für den Lochbohrvorgang festzulegen, nach beendetem Lochbohrvorgang das Werkstück in der Haupttransportrichtung (18) zu bewegen, um das vordere Ende (2B) des Werkstücks (2) in enge Anlage an den vorderen Anschlag (17) zu bringen und es zum Lochbohren festzulegen, und um das Werkstück (2) anschließend in der Haupttransportrichtung (18) aus der Vorrichtung hinauszufördern, und daß die Fördereinrichtung (4,5) und die hinteren und vorderen Anschläge (16,17) relativ zueinander beweglich sind, um das Werkstück zwischen ihnen für den Bohrvorgang festzulegen.

4. Vorrichtung nach Anspruch 3, dadurch gekennzeichnet, daß die Distanz zwischen den vorderen und hinteren Bohrstationen mehr als die doppelte Länge des am häufigsten vorkommenden Werkstücks (2) ist.

5. Vorrichtung nach Anspruch 3, dadurch gekennzeichnet, daß die Fördereinrichtung (4,5) dazu eingerichtet ist, gegen die Anschläge (16,17) angehoben zu werden, um das fragliche Werkstück (2) festzulegen.

FIG.1

FIG.2

15 13 11 17

2 16 10 12 14

18

★

18 6 5 4 3 18

FIG.3

9

2 2A 16A

8

★

45

7B 7 7A

FIG.4

2 46 16B 8

★

7 46

EP 0 129 521 B1

FIG.5

FIG.6

FIG.7

EP 0 129 521 B1